# EUROPEAN PATENT SPECIFICATION

(11) **EP 3 162 557 B1**
(45) Date of publication and mention of the grant of the patent: **27.11.2024**
(21) Application number: 16195437.5
(22) Date of filing: 25.10.2016
(51) Int. Cl.: B32B 7/02, B32B 7/12, B32B 25/08, B32B 25/10, B32B 25/14, B32B 25/18, B32B 27/12, B32B 27/20, B32B 27/30, B32B 27/32, B32B 1/08, F16L 9/12, F16L 11/08

(54) **MULTILAYER TUBE, PARTICULARLY FOR FLUIDS**
MEHRLAGIGES ROHR, INSBESONDERE FÜR FLÜSSIGKEITEN
TUYAU MULTICOUCHE, EN PARTICULIER POUR LIQUIDES

(30) Priority: 26.10.2015 IT UB20155175
(43) Date of publication of application: 03.05.2017
(73) Proprietor: FLUOR TUBING B.V., 3542 CH Utrecht (NL); Tubigomma Deregibus S.r.l., 35030 Saccolongo (PD) (IT)
(72) Inventor: DEREGIBUS, Andrea, 35142 PADOVA (IT); SOETERBROEK, Alexander J. A., 3735KB BOSCH EN DUIN (IT)
(74) Representative: Modiano, Micaela Nadia

(56) References cited:
- EP-A1- 1 450 092
- EP-A1- 2 177 348
- EP-A2- 1 306 202

## Description

The present invention relates to a multilayer tube, particularly for fluids, which has applications in many and varied sectors, such as for example the food sector, the chemical sector, the pharmaceutical sector and the cosmetics sector.

Nowadays the use is known of multilayer tubes constituted by a sheath, located in the innermost layer of the tube, which comes directly into contact with the fluid, by one or more intermediate reinforcement layers, and by an external covering layer.

It is also known to subject the outer surface of the inner sheath, made of fluorinated polymers such as FEP, MFA, PFA, ECTFE and PTFE, to a cementing process, a chemical process that renders the fluorinated polymer bondable by adhesive to other surfaces, which would otherwise not be possible because surface non-adhesiveness is one of its principal characteristics, in order to enable stable adhesion with the subsequent layer, generally made with organic and inorganic elastomers such as silicone.

The cementing process entails the coloring (generally dark brown) of the sheath; as a consequence the user who inspects the inside of the tube to check the cleaning thereof will observe a dark patina which is substantially unaesthetic and which conveys an impression of dirt.

In order to overcome the problem, it is known to mask the coloring by increasing the thickness of the sheath so that the dark patina is no longer visible to a user who may inspect the tube.

A drawback that arises in this known art consists in that the multilayer tube has a high mechanical rigidity that consequently limits its flexibility. Furthermore, such known art requires the use of a large quantity of material, which entails high costs.

A further solution is also known for preventing the user from seeing the dark patina, which consists of pigmenting the material with which the sheath is made, for example using titanium oxide to give it a white coloring.

A drawback that can arise in this known art consists in that, during the transition of the fluid inside the tube, an extraction could occur of the substances used to pigment the sheath, which would therefore be transferred to the fluid that flows inside the tube and is consequently in contact with the pigmented sheath, thus polluting the fluid.

Document EP 2 177 348 A1, for example, discloses a tube comprising a layer structure consisting of an inner layer, which is resistant against a medium to be conveyed, a first elastomer intermediate layer, which forms a durable adhesive bond with the inner layer and is directly connected with the inner layer, first and second embedded strength support layers and an abrasion-resistant elastomer outer layer. The inner layer is made of soot-free plastic, contains fluorine-containing plastic and pigment-free plastic, is present in the form of foil or is a seamless extruded inner tube. Inorganic or organic pigments are incorporated into the inner layer, are simultaneously distributedly incorporated inside the plastic and are white pigments.

Tubes having inner pigmented or carbon black additive layers are also known from documents EP 1 450 092 (A1) and EP 1 306 202 (A2).

The aim of the present invention is to eliminate the above mentioned drawbacks, by providing a multilayer tube, particularly for fluids, which makes it possible to preserve and maintain the characteristics of the fluid that flows inside it.

Within this aim, an object of the present invention is to provide a multilayer tube that is flexible.

Another object of the invention is to provide a multilayer tube that can be given a desired and optimal visual impact.

Another object is to provide a multilayer tube that is structurally simple and low cost and can be made with the usual conventional plants.

This aim and these and other objects which will become better apparent hereinafter are achieved by a multilayer tube, particularly for fluids, in accordance with the invention, that has the features set forth in claim 1.

Further characteristics and advantages of the invention will become better apparent from the detailed description of a particular, but not exclusive, embodiment of the multilayer tube according to the invention, which is illustrated by way of non-limiting example in the accompanying drawings wherein:

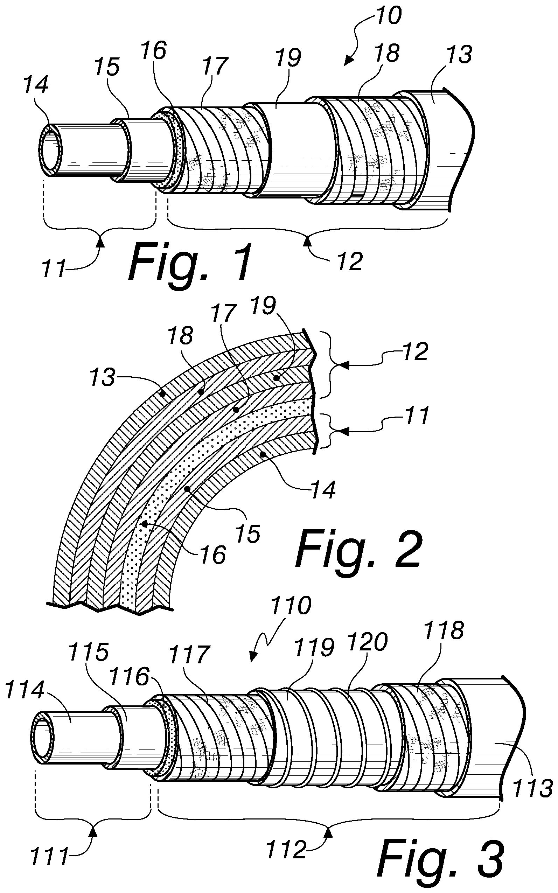

- Figure 1 is a schematic perspective view of a multilayer tube in a first embodiment thereof;
- Figure 2 is a partial cross-section view of the sheath of Figure 1;
- Figure 3 is a schematic perspective view of the multilayer tube in a second embodiment thereof.

In the embodiments illustrated, individual characteristics shown in relation to specific examples may in reality be interchanged with other, different characteristics, existing in other embodiments.

With reference to the figures, the reference numeral 10, 110 generally designates a multilayer tube, particularly for fluids, provided with a cylindrical and internally hollow shape.

The multilayer tube 10, 110 is constituted by a sheath 11, 111, located in the innermost layer, which is adapted to be placed in direct contact with a fluid in transit; there are further one or more intermediate reinforcement layers 12, 112, which are arranged coaxial to the sheath 11, 111, and an external covering layer 13, 113, which is made of elastomeric material and is coaxial to the one or more reinforcement layers 12, 112.

The sheath 11, 111 is co-extruded and made of fluorinated polymers.

Such fluorinated polymers can be any one of FEP, MFA, PFA, ECTFE and PTFE; the sheath 11, 111 is in turn constituted by an internal substrate 14, 114 made of a non-pigmented virgin material, and by an external substrate 15, 115 made of pigmented material, preferably, but not exclusively, white.

The external substrate 15, 115 of the sheath 11, 111, which is cemented by way of a chemical process that renders the fluorinated polymer bondable by adhesive to other surfaces, and the innermost intermediate reinforcement layer 12, 112, are coupled stably by way of the interposition of a layer of rubber 16, 116.

The covering layer 13, 113 is made of rubber.

The intermediate reinforcement layers 12 comprise, in a first embodiment, at least one first textile reinforcement layer 17, and in particular they comprise a first and a second textile reinforcement layers 17, 18 with the interposition of a filler layer 19 made of elastomeric material.

The first and the second textile reinforcement layers 17, 18 are made, by way of example, of PET polyester or aramid fabric.

The filler layer 19 of elastomeric material is made, advantageously, of rubber.

The intermediate reinforcement layers 112 comprise, in a second embodiment, at least a first textile reinforcement layer 117 and in particular they comprise a first and a second textile reinforcement layers 117, 118, with the interposition of a filler layer 119 made of elastomeric material, coaxially to which a reinforcement spiral 120 is stably wound and associated, with variable inclination and pitch according to the applicative and productive requirements.

The first and the second textile reinforcement layers 117, 118 are made, by way of example, of PET polyester or of aramid fabric.

The filler layer 119 of elastomeric material is made, advantageously, of rubber.

The optional reinforcement spiral 120 is made of metallic material, such as for example carbon steel, galvanized or stainless. Alternatively such reinforcement spiral 120 is made of a thermoplastic material.

The choice of material, the arrangement and the number of helices can vary and depend on the production technology, on the type of characteristics sought and on the type of performance required from the tube.

Thus it has been found that the invention fully achieves the intended aim and objects, a multilayer tube 10, 110, particularly for fluids, having been obtained which makes it possible to preserve and maintain the characteristics of the fluid that flows inside it by virtue of the fact that between the fluid and the pigmented external substrate 15, 115 is interposed the internal substrate 14, 114, made of non-pigmented virgin fluorinated polymer such as FEP, MFA, PFA, ECTFE and PTFE, which prevents any contamination of the fluid by the substances used for the pigmentation of the external substrate 15, 115.

It has further been observed that the multilayer tube is flexible, a tube having been obtained that has a sheath with a contained overall thickness that advantageously allows the tube to bend.

It has further been found that the multilayer tube has a good visual impact by virtue of the fact that the sheath 11, 111 is constituted by an external substrate 15, 115, made of fluorinated polymer such as FEP, MFA, PFA, ECTFE and PTFE which is pigmented, preferably advantageously white; the user who has to inspect the inside of the tube will therefore see the uniformly white color of the external substrate 15, 115 which will obscure the color of the layer of cement above it.

The invention is susceptible of numerous modifications and variations, all of which are within the scope of the appended claims.

Obviously the materials used as well as the dimensions of the individual components of the invention may be more relevant according to specific requirements.

The characteristics indicated above as advantageous, convenient or the like, may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multilayer tube (10, 110), particularly for fluids, provided with an internally hollow shape, comprising a seath (11, 111) made of fluorinated polymers, located in the innermost layer of said multilayer tube (10, 110), said sheath (11, 111) being constituted by an internal substrate (14, 114) made of non pigmented virgin material and by an external substrate (15, 115) made of pigmented material **characterized in that** the sheath (11, 111) is co-extruded.

2. The tube according to claim 1, **characterized in that** said fluorinated polymers are constituted by any one of FEP, MFA, PFA, ECTFE, and PTFE.

3. The tube according to claims 1 or 2, **characterized in that** said multilayer tube (10, 110) is constituted by said sheath (11, 111), which has said internal substrate (14, 114) adapted to be placed in direct contact with a fluid in transit, by said one or more intermediate reinforcement layers (12, 112), which are arranged coaxial to said sheath (11, 111), and by an external covering layer (13, 113), which is made of elastomeric material and is coaxial to said one or more intermediate reinforcement layers (12,112).

4. The multilayer tube (10, 110) according to claims 1, 2 or 3, **characterized in that** said external substrate (15, 115) of said sheath (11, 111), which is cemented by way of a chemical process that renders the fluorinated polymer bondable by adhesive to other surfaces, and an innermost layer of said one or more intermediate reinforcement layers (12, 112) are coupled stably by way of the interposition of a layer of rubber (16, 116).

5. The multilayer tube (10, 110) according to one or more of the preceding claims, **characterized in that** said intermediate reinforcement layers (12, 112) comprise at least a first textile reinforcement layer (17,117).

6. The multilayer tube (10) according to one or more of the preceding claims, **characterized in that** said intermediate reinforcement layers (12) comprise at least a first textile reinforcement layer (17) and a second textile reinforcement layer (18), with the interposition of a filler layer (19) made of elastomeric material.

7. The multilayer tube (110) according to one or more of the preceding claims, **characterized in that** said intermediate reinforcement layers (112) comprise said first and said second textile reinforcement layers (117, 118) with the interposition of a filler layer (119) made of elastomeric material, coaxially to which one or more reinforcement spirals (120), made of metallic or thermoplastic material, are wound and stably associated.

8. The tube according to claim 1, **characterized in that** said external substrate (15, 115) is made of white pigmented material.

## Patentansprüche

1. Ein mehrschichtiges Rohr (10, 110), insbesondere für Fluide, versehen mit einer innen hohlen Form, die eine Hülse (11, 111) aus fluorierten Polymeren umfasst, welche sich in der innersten Schicht des mehrschichtigen Rohrs (10, 110) befindet, wobei die Hülse (11, 111) aus einem internen Substrat (14, 114), das aus nicht pigmentiertem frisch hergestelltem Material besteht, und einem externen Substrat (15, 115) besteht, das aus pigmentiertem Material hergestellt ist; **dadurch gekennzeichnet, dass** die Hülse (11, 111) co-extrudiert ist.

2. Das Rohr gemäß Anspruch 1, **dadurch gekennzeichnet, dass** die fluorierten Polymere aus einem beliebigen von FEP, MFA, PFA, ECTFE und PTFE bestehen.

3. Das Rohr gemäß Anspruch 1 oder 2, **dadurch gekennzeichnet, dass** das mehrschichtige Rohr (10, 110) aus der Hülse (11, 111) besteht, die das interne Substrat (14, 114) hat, ausgebildet, um in direkten Kontakt mit einem hindurchströmenden Fluid positioniert zu werden, durch die einen oder mehreren intermediären Verstärkungsschichten (12, 112), die koaxial mit der Hülse (11, 111) angeordnet sind, und durch eine externe Deckschicht (13, 113), die aus Elastomermaterial besteht und koaxial mit den einen oder mehreren intermediären Verstärkungsschichten (12, 112) ist.

4. Das mehrschichtige Rohr (10, 110) gemäß Anspruch 1, 2 oder 3, **dadurch gekennzeichnet, dass** das externe Substrat (15, 115) der Hülse (11, 111), das durch ein chemisches Verfahren gehärtet wird, welches das fluorierte Polymer durch Klebstoff mit anderen Oberflächen bindungsfähig macht, und eine innerste Schicht der einen oder mehreren intermediären Verstärkungsschichten (12, 112) durch Anordnung einer Schicht Gummi (16, 116) dazwischen fest gekoppelt werden.

5. Das mehrschichtige Rohr (10, 110) gemäß einem oder mehreren der obigen Ansprüche, **dadurch gekennzeichnet, dass** die intermediären Verstärkungsschichten (12, 112) mindestens eine erste textile Verstärkungsschicht (17, 117) umfassen.

6. Das mehrschichtige Rohr (10) gemäß einem oder mehreren der obigen Ansprüche, **dadurch gekennzeichnet, dass** die intermediären Verstärkungsschichten (12) mindestens eine erste textile Verstärkungsschicht (17) und eine zweite textile Verstärkungsschicht (18) umfassen, mit Anordnung einer Füllschicht (19) aus Elastomermaterial dazwischen.

7. Das mehrschichtige Rohr (110) gemäß einem oder mehreren der obigen Ansprüche, **dadurch gekennzeichnet, dass** die intermediären Verstärkungsschichten (112) die ersten und die zweiten textilen Verstärkungsschichten (117, 118) umfassen, mit Anordnung einer Füllschicht (119) aus Elastomermaterial dazwischen, koaxial mit welcher eine oder mehrere Verstärkungsspiralen (120) aus metallischem oder thermoplastischem Material gewickelt und fest verbunden sind.

8. Das Rohr gemäß Anspruch 1, **dadurch gekennzeichnet, dass** das externe Substrat (15, 115) aus weißem pigmentiertem Material besteht.

## Revendications

1. Tube multicouche (10, 110), en particulier pour des fluides, pourvu d'une forme intérieurement creuse, comprenant une gaine (11, 111) constituée de polymères fluorés, située dans la couche la plus interne dudit tube multicouche (10, 110), ladite gaine (11, 111) étant composée d'un substrat interne (14, 114) constitué d'un matériau vierge non pigmenté et d'un substrat externe (15, 115) constitué de matériaux pigmentés, **caractérisé en ce que** la gaine (11, 111) est coextrudée.

2. Tube selon la revendication 1, **caractérisé en ce que** lesdits polymères fluorés sont constitués de l'un quelconque parmi FEP, MFA, PFA, ECTFE et PTFE.

3. Tube selon la revendication 1 ou 2, **caractérisé en ce que** ledit tube multicouche (10, 110) est constitué de ladite gaine (11, 111), qui comporte ledit substrat interne (14, 114) adapté pour être placé en contact direct avec un fluide en transit, par lesdites une ou plusieurs couches de renforcement intermédiaires (12, 112), qui sont disposées coaxialement à ladite gaine (11, 111), et par une couche de revêtement externe (13, 113), qui est constituée d'un matériau élastomère et est coaxiale auxdites une ou plusieurs couches de renforcement intermédiaires (12, 112).

4. Tube multicouche (10, 110) selon les revendications 1, 2 ou 3, **caractérisé en ce que** ledit substrat externe (15, 115) de ladite gaine (11, 111), qui est cimenté au moyen d'un procédé chimique qui rend le polymère fluoré adhésif à d'autres surfaces, et une couche la plus interne desdites une ou plusieurs couches de renforcement intermédiaires (12, 112) sont accouplés de manière stable au moyen de l'interposition d'une couche de caoutchouc (16, 116).

5. Tube multicouche (10, 110) selon une ou plusieurs des revendications précédentes, **caractérisé en ce que** lesdites couches de renforcement intermédiaires (12, 112) comprennent au moins une première couche de renforcement textile (17, 117).

6. Tube multicouche (10) selon une ou plusieurs des revendications précédentes, **caractérisé en ce que** lesdites couches de renforcement intermédiaires (12) comprennent au moins une première couche de renforcement textile (17) et une deuxième couche de renforcement textile (18), avec l'interposition d'une couche de charge (19) constituée de matériau élastomère.

7. Tube multicouche (110) selon une ou plusieurs des revendications précédentes, **caractérisé en ce que** lesdites couches de renforcement intermédiaires (112) comprennent lesdites première et deuxième couches de renforcement textile (117, 118) avec interposition d'une couche de charge (119) en matériau élastomère, coaxialement auxquelles une ou plusieurs spirales de renforcement (120), constituées de matériau métallique ou thermoplastique, sont enroulées et associées de manière stable.

8. Tube selon la revendication 1, **caractérisé en ce que** ledit substrat externe (15, 115) est constitué de matériau pigmenté blanc.
